# EUROPEAN PATENT SPECIFICATION

(11) **EP 3 507 900 B1**
(45) Date of publication and mention of the grant of the patent: **24.12.2025**
(21) Application number: 17765115.5
(22) Date of filing: 31.08.2017
(51) Int. Cl.: H02S 20/23

(54) **PHOTOVOLTAIC ROOFING PANEL**
FOTOVOLTAISCHES DACHPANEEL
PANNEAU PHOTOVOLTAÏQUE DE TOITURE

(30) Priority: 31.08.2016 DK PA201670668
(43) Date of publication of application: 10.07.2019
(73) Proprietor: ENNOGIE APS, 400 Herning (DK)
(72) Inventor: LINDHOLM, Kristian Harley, 7400 Herning (DK); OLESEN, Stephan, 7430 Ikast (DK)
(74) Representative: Münzer, Marc Eric
(86) International application number: PCT/EP2017/071889
(87) International publication number: WO 2018/041962

(56) References cited:
- EP-A1- 3 054 588
- FR-A1- 3 002 620
- GB-A- 2 463 556
- GB-A- 2 463 556
- US-A1- 2013 133 284
- US-A1- 2013 133 284
- ANONYMOUS: "Danish Design Award 2016 Presents the Winners - Danish Design Award", 7 April 2016 (2016-04-07), XP055927040, Retrieved from the Internet <URL:https://danishdesignaward.com/en/arkiver/1623> [retrieved on 20220601]
- ANONYMOUS: "Innogie Roofing System - Danish Design Award", 7 April 2016 (2016-04-07), XP055927057, Retrieved from the Internet <URL:https://danishdesignaward.com/en/arkiver/nominee/innogie-roofing-system> [retrieved on 20220601]

## Description

The present invention relates to a Photo Voltaic (PV) roofing panel for placing on a roof structure where the PV roofing panel is suitable for being arranged with other PV roofing panels in a tile like manner to form a roof coverage, the PV roofing panel comprising a PV panel having an essentially rectangular shape, with a lower edge, an upper edge, a first side edge, a second side edge, a sky facing surface, and a roof facing surface and comprising a panel support element attached to the roof facing surface of the PV panel.

In the following the lower edge of the PV panel should be understood as the lowest level edge of the PV panel when the roofing panel is located on a sloping roof surface and the upper edge should be understood as the highest level edge of the PV panel when located on a sloping roof surface. The first side edge and the second side edges could be the left side edge and the right side edge of the PV panel respectively when viewing the PV panel from above and from the lower edge. Likewise, the lower end of the panel should be understood as the end closest to the lower edge. Likewise the upper end of the panel should be understood as the end closes to the upper edge.

The term outwardly should be understood as a direction having a vector component which extends from the centre of the panel towards the outer edge of the panel. The term inwardly should be understood as a direction having a vector component which is opposite to outwardly, ie from the outer edge towards the centre. The outwards direction at the left and right edges will therefore be opposite to each other. The same is true for the outwards directions at the top and bottom edge.

The terms downward and upward and the terms below and above should be understood with respect to a plane which is parallel with the roof substructure. Something which is above the plane is closer to the sky. Something which is below the plane is closer to the roof substructure. The upwards direction is towards the sky and the downwards direction is towards the roof.

It should be noted that the current invention relates to a Photo Voltaic (PV) panel, in other words a panel which generates electricity from light. However, the invention should also be understood to cover PVT panels, or panels which have a "Thermal" (T) function in addition to the photo voltaic functions. This could for example be an assembly comprising flu d filled pipes arranged on the backside of a PV panel.

The use of PV panels to collect energy from the sun is well known, and has become more common in recent years. The use of PV panels can generate electrical energy without the emission of greenhouse gases as compared to generation of electrical energy via combustion of fossil fuels and coal.

The most common way of collecting energy has been to mount such PV panels a small distance above existing water and wind proof roof coverages via fittings anchored in the roof sub structure. Examples of such systems are disclosed in DE102007036208A1, DE10200800963384 and EP2186964B1. For example, metal roof panels are first mounted or the roof sub structure. PV panels are then mounted on top of the metal roof panels.

However, most of said PV panels are in themselves water and windproof plate shaped elements and as such the idea of using the PV panels themselves as part of the roofing coverage itself has started to be considered. Systems are therefore known in which the PV panel is integrated into roof covering panels which form the waterproof and windproof roof coverirg. In this way, it is possible to mount both the PV panels and the waterproof and windproof roof covering as a single unit, thereby saving an assembly step. This is shown in for example EP1310747B1. However, many of these known integrated systems are still based on the concept of a solar panel mounted on top of the waterproof and windproof roof covering. A document which shows a system where the PV panel is more closely integrated into the roof covering itself is disclosed in DE10037757B4. However, this document does not disclose how the panels are formed to allow them to be joined together. Another example is US2013133284 which also discloses a complete roof structure which comprises PV panels, but details of how the structure is made water proof is not disclosed. Another example is FR3002620A1 which discloses a photovoltaic roofing panel comprising a panel support element.

It should also be noted that for PV panels which produce electricity, it is known that the efficiency of the panels depends on the temperature of the panels and as such, in order to achieve the highest efficiency, in certain cases it can be important to provide means for cooling the panels. This is to a certain extent a technical challenge, especially if the panels are integrated very tightly into the roof construction. In certain cases, extra cooling could be provided by arranging air channels behind the panels to allow air to circulate through the channels or by arranging fluid filled tubes with contact surfaces on the downwards facing side of the panels and circulating the brine. The brine could furthermore be connected to heat collection means, such as a heat pump or a hot water accumulator to collect the heat and use it as central heating and/or heating water. This solution might be appropriate in some climate zones, but not in other e.g. in areas where the need of heating is minor, but the need of electricity is high.

In a first aspect of the current invention, a roof covering is provided which uses the PV panel as an integral component of the waterproof and windproof roof covering. This can save material costs while also saving installation time.

In a second aspect of the current invention, a roof covering is provided where the lower edge of an upper PV panel can be overlapping the upper edge of a lower PV panel. In this way, no gaps are provided between solar panels arranged above each other, so that rain and other matter cannot be trapped between PV panels and/or cannot be trapped under the PV panels.

In a third aspect of the current invention, a roof covering is provided where the PV panels are efficiently supported along their lengths and without internal stresses which could weaken the panels and cause damage during assembly or use.

In a fourth aspect of the current invention, a roof covering is provided where there is an air channel provided underneath the PV panel whereby the PV panel can be cooled during operation to increase its efficiency.

These aspects are solved at least in part by a PV roofing panel as claimed in claim 1.

Hereby is achieved a roofing panel which incorporates a PV panel as a significant element in its construction and as the primary water and wind proof covering element of the roofing panel. The roofing panel is suited to be tile laid on a roof sub structure with other similar roofing panels to provide a water and wind proof roof coverage while at the same time making it possible to generate electrical power. In this way, traditional waterproof roof coverage in addition to the PV panel is made superfluous.

Furthermore, according to the arrangement of the outwardly extending flanges and the angle at which they are arranged, the PV panels of adjacent roofing panels in the vertical direction are able to overlap each other without generating mechanical stresses in the construction while still maintaining a good water proof surface. Similarly, the arrangement allows embodiments to be provided where the PV panel is supported along its entire length and not just at its ends. This again ensures that the PV panel is not mechanically stressed.

It should be noted that in the claims it is stated that the outwardly extending flanges are arranged "along the side edges" of the PV panel. This should be understood as near the side edges. As can be seen in the embodiments shown in the figures, the flanges are not exactly at the side edges or exactly parallel to the side edges. Rather, they are close to the side edges.

In one embodiment, the panel support element comprises a first downwardly extending flange and a second downwardly extending flange arranged along the first side edge and the second side edge of the PV panel respectively, and the first and second outwardly extending flanges extend from the bottom edges of said first and second downwardly extending flanges respectively and the panel support element further comprises a first and a second inwardly extending flange which is arranged along the top edge of the downwardly extending flanges, the roof facing surface of the PV panel being fastened to said inwardly extending flanges. In this way, a very simple and strong construction is provided.

In one embodiment, the outwardly, the inwardly and the downwardly extending flanges run essentially the entire length of the PV panel. In this way the flanges can support the PV panel along its entire length. In one embodiment, an adhesive is applied between the roof facing surface of the PV panel and the upwards facing surface of the inwardly extending flanges along essentially the entire contact surface between the PV panel and the inwardly extending flanges. In one embodiment, a flexible adhesive is used which allows the PV panel to move slightly with respect to the panel support element. This allows the roofing panel to absorb tolerances and/or absorb temperature caused expansions in the roof substructure without introducing great stresses into the PV panel.

In one embodiment, the first and second downwardly extending flanges are arranged inside the side edges of the PV panel and the lower edge of the PV panel protrudes past the lower edge of the panel support element and the upper edge of the panel support element extends past the upper edge of the PV panel. By arranging the downwardly extending flanges inside the side edges of the PV panel, the downwardly extending flanges will be protected from the weather by the PV panel. Rain will therefore not run down the sides of the flanges, unless the rain has a very horizontal component to push it in under the overhang on the PV panel. Likewise, by placing the downwardly extending flanges further towards the centre of the PV panel, the supporting effect of the flanges can be increased on the panel. This can reduce the demands on strength and stiffness for the PV panel. By placing the downwardly extending flanges inside the side edges, it is no longer possible to overlap the PV panels of two adjacent roofing panels in a simple manner since the downwardly extending flanges will be in the way. Therefore, the lower edge of the PV panel extends past the lower end of the panel support element and the upper end of the panel support element extends past the upper edge of the PV panel. In this way, two adjacent roofing panels can be arranged such that the PV panels can overlap in a vertical direction.

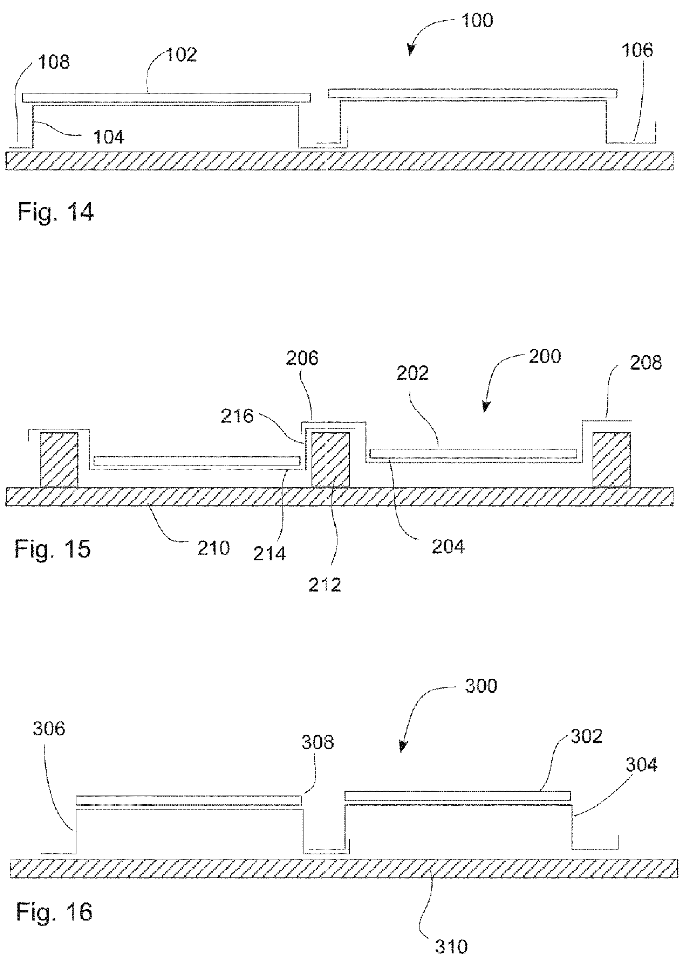

In another embodiment, the distance between the first downwardly extending flange and the second downwardly extending flange at the upper edge of the PV panel is less than the distance between the first downwardly extending flange and the second downwardly extending flange at the lower edge of the PV panel. In this way, the lower portion of an upper panel can overlap the upper portion of a lower panel. This is true in the case where the panel has downwardly extending flanges. However, in a construction where the PV panel was arranged below outwardly extending flanges, and there were upwardly extending flanges, then the opposite relationship could be applied to the upwardly extending flanges, see the embodiment of figure 15 for example.

In one embodiment, the panel support element comprises an upwardly extending flange arranged at the outer edge of the first or the second outwardly extending flange such that an upwardly facing U-shaped channel is formed along the first or the second side edge of the PV panel. In this way, a channel is formed with a "wall" on both sides. This increases the waterproofing abilities of the roofing panels as it is difficult for water to climb up the side walls.

In order to further improve the waterproofing properties of the roofing panel, an upwardly extending flange could be arranged at the outer edges of both the first and the second outwardly extending flanges such that an upwardly facing U-shaped channel can be formed along both side edges of the PV panel and in that the width of the upwardly facing U-shaped channel on the left side is greater than or less than the width of the upwardly facing U-shaped channel on the right side and in that the width of the channels at the upper edge of the PV panel is greater than the width of the channels at the lower edge of the PV panel. The dimensions are chosen such that upper and lower adjacent roofing panels can overlap and such that roofing panels arranged beside each other in the left/right direction can also overlap. It should be noted that the claims state that the left channel is narrower or wider than the right channel. This should be understood in that the left channel should fit into the right channel or the right channel should fit into the left channel. In other words, in this embodiment the channels should not have the same width.

In order to provide a good strength to the panel support element, the angle between the downwardly extending flanges and the PV panel is between 45 and 90 degrees, or between 60 and 90 degrees or between 75 and 90 degrees or essentially 90 degrees. In many prior art roofing panels, the angles are chosen to be quite flat. This allows panels to be stacked on top of each other easier, but lowers the strength and the water proofing capabilities.

To even further increase the strength of the panel support element, the panel support element could further comprise a third and a fourth downwardly extending flange arranged along the inner edges of the inwardly facing flanges of the panel support element, said first and third downwardly extending flanges and the first inwardly extending flange forming a first downwards facing U shaped channel and the second and fourth downwardly extending flanges and the second inwardly extending flange forming a second downwards facing U shaped channel. In this way, box shaped ridges are formed as part of the panel support element. Such box shaped ridges can be made quite strong and stiff without requiring a thick and heavy material. In a further embodiment, additional inwardly extending flanges can be attached along the lower edges of the third and fourth downwardly extending flanges. These additional flanges could be formed in the same plane as the outwardly extending flanges such that they abut the roof surface when mounted. In this way they can provide extra support for the PV panel.

In a preferred embodiment, the panel support element comprises a first support element attached to the PV panel along the first side edge of the PV panel and a second support element attached to the PV panel along the second side edge of the PV panel. In one embodiment, the first and second support elements can be provided as individual metal plates which are bent along linear lines.

In order to improve the waterproofing capabilities of the roofing panel and to allow for increased tolerances in the construction of the panels, the PV roofing panel could further comprise a sealing strip arranged along the upper edge of the PV panel and could have a portion which overlaps a portion of the sky facing surface of the PV panel at the upper edge of the PV panel and extends in a direction having a vector component which is perpendicular to the sky facing surface of the PV panel. In another embodiment, a sealing strip could be arranged along the lower edge of the PV panel and could have a portion which overlaps a portion of the roof facing surface of the PV panel at the lower edge of the PV panel and extends in a direction having a vector component which is normal to the roof facing surface of the PV panel. In one embodiment, a sealing strip could be applied at the upper and the lower edge of the PV panel. In one embodiment, the sealing strips at the upper and lower edges could be made to engage each other to even further increase the sealing abilities of the roofing panels.

In another invention which could form the basis of a divisional application, a PV roofing panel as described in the introductory paragraph could be provided where the panel support element (13,15) comprises a first downwardly extending flange (16) and a second downwardly extending flange (18) arranged along the first and second side edges of the PV panel respectively, the first and second downwardly extending flanges (16,18) being arranged inside the side edges of the PV panel and further comprising outwardly extending flanges (28, 30) arranged along the bottom edges (20, 22) of said flanges (16, 18), said outwardly extending flanges extending outside the first- and second side edges (8, 10) of the PV panel, and the lower edge (4) of the PV panel protruding past the lower edge of the panel supports (13, 15) and the upper end of the panel support element extending past the upper edge (6) of the PV panel (3).

In another invention which could form the basis of a divisional application, a PV roofing panel as described in the introductory paragraph could be provided where the panel support element (13, 15) comprises a first downwardly extending flange (16) and a second downwardly extending flange (18) arranged along the first side edge (8) and the second side edge (10) of the PV panel, the distance between the upper portion of the first downwardly extending flange and the upper portion of the second downwardly extending flange being less than the distance between the lower portion of the first downwardly extending flange and the lower portion of the second downwardly extending flange.

In another invention which could form the basis of a divisional application, a PV roofing panel as described in the introductory paragraph could be provided where the panel support element comprises a first support element (13) attached to the PV panel along the first side edge (8) of the PV panel (3) and a second support element (15) attached to the PV panel (3) along the second side edge (10) of the PV panel (3), said first and second support elements (13,15) being provided as individual metal plates which are bent along linear lines.

In another invention which could form the basis of a divisional application, a PV roofing panel as described in the introductory paragraph could be provided where the panel support element (13, 15) comprises a first downwardly extending flange (16) and a second downwardly extending flange (18) arranged along the first side edge (8) and the second side edge (10) of the PV panel respectively, the bottom edges (20, 22) of said flanges (16, 18) having outwardly extending flanges (28, 30) extending outside the first- and second side edge (8, 10) of the PV panel, the outer edges of said outwardly extending flanges having upwardly extending flanges such that an upwardly facing U-shaped channel is formed on either side of the PV panel and in that the width of the upwardly facing U-shaped channel (36) on the left side is greater than or less than the width of the upwardly facing U-shaped channel (38) on the right side and in that the width of the channels (36,38) at the upper edge (6) of the PV panel (3) is greater than the width of the channels (36,38) at the lower edge (4) of the PV panel (3).

It should be clear that five independent inventions are disclosed in this specification. A number of additional embodiments are described with respect to the first invention via the above description and the claims. It should be clear that the features of the embodiments of the first invention could be combined in multiple manners with the features of the second through fifth inventions as described above.

It should also be noted that the form and construction of the different PV roofing panels described above could also be used with a solar panel which was a purely thermal absorbing panel. In other words, instead of a PV panel, a Solar Panel could be used. The current claim scope covers PV panels alone, but divisional applications could be filed which cover solar/thermal panels instead. In such applications, a solar/thermal panel could be defined as a panel with a thermal energy absorbing surface and a thermal energy transfer element which can transfer the heat energy collected to other elements in the system.

It should be emphasized that the term "comprises/comprising/comprised of" when used in this specification is taken to specify the presence of stated features, integers, steps or components but does not preclude the presence or addition of one or more other features, integers, steps, components or groups thereof. For example, in the claims it is stated that the roofing panel comprises a PV panel. However, within the scope of protection, the roofing panel could comprise additional PV panels. Likewise, in the claims it is stated that the roofing panel comprises a first downwardly extending flange and a second downwardly extending flange. This should also be understood in that embodiments with additional downwardly extending flanges are also covered by the scope of the claims.

### Brief description of the drawings

In the following, the invention will be described in greater detail with reference to embodiments shown by the enclosed figures. It should be emphasized that the embodiments shown are used for example purposes only and should not be used to limit the scope of the invention.
Fig. 1 shows a top perspective view of a first embodiment of a PV roofing panel according to the invention,
Fig. 2 is an exploded view of the PV roofing panel shown in Fig. 1,
Fig. 3 is a perspective detail view of an upper end portion of the PV roofing panel shown in Fig. 1 and Fig. 2,
Fig. 4 is a right side view of the PV roofing panel shown in Fig. 1 and Fig. 2,
Fig. 5 shows a top perspective view of a portion of a roof substructure, ready for tile-laying PV roofing panels as shown in Fig. 1-4,
Fig. 6 shows the roof substructure in Fig. 5, now with four PV roofing panels tile laid,
Fig. 7 shows a roof coverage made up of tile-arranged PV roofing panels as shown in Fig. 1-4,
Fig. 8 is a detail perspective view of two abutting PV roofing panels according to the invention, where the upper panel is in the process of being laid on top of the lower panel,
Fig. 9 is a partial right side view of two tile-laid PV roofing panels as shown in Fig. 1-4,
Fig. 10 is a partial end view of the interface between two tile-arranged PV roofing panels as shown in Fig. 1-4 with a vertical gap between the panels for illustration purposes,
Fig. 11 is an end view of one embodiment of a sealing strip for a PV roofing panel according to the invention,
Fig. 12 is a detailed perspective view of the first and second support elements of the roofing panel of figures 1-4 with dimensions in millimeters,
Fig. 13 shows an exploded perspective view of a second embodiment of a PV roofing panel according to the invention,
Fig. 14 shows a schematic end view of a third embodiment of a roofing panel according to the invention,
Fig. 15 shows a schematic end view of a fourth embodiment of a roofing panel according to the invention, and
Fig. 16 shows a schematic end view of a fifth embodiment of a roofing panel according to the invention.
Fig. 17 shows a perspective view of one method of removing a PV panel from an existing roof.

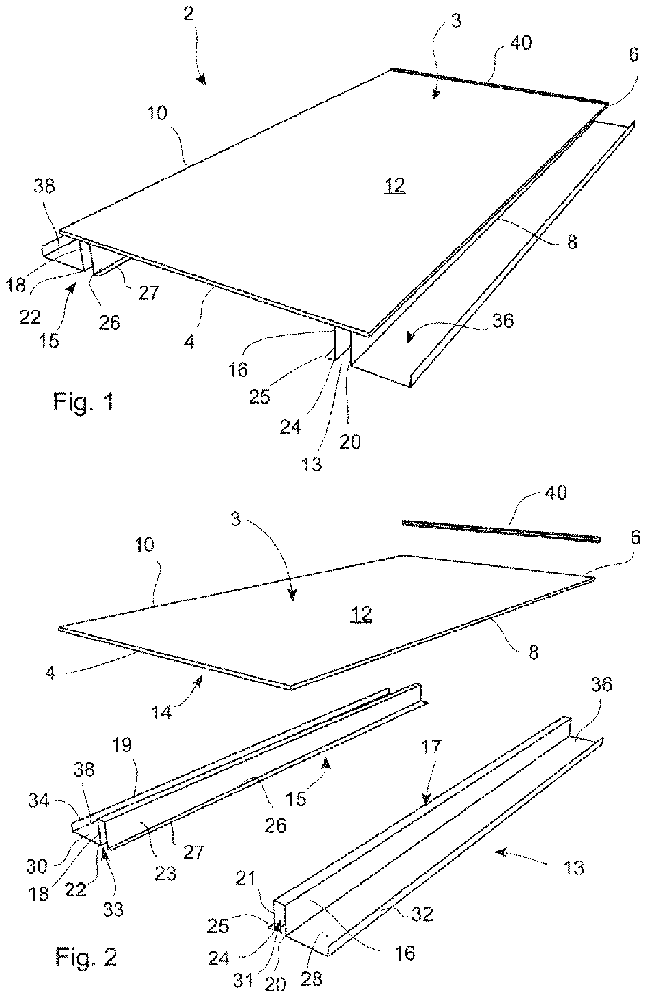

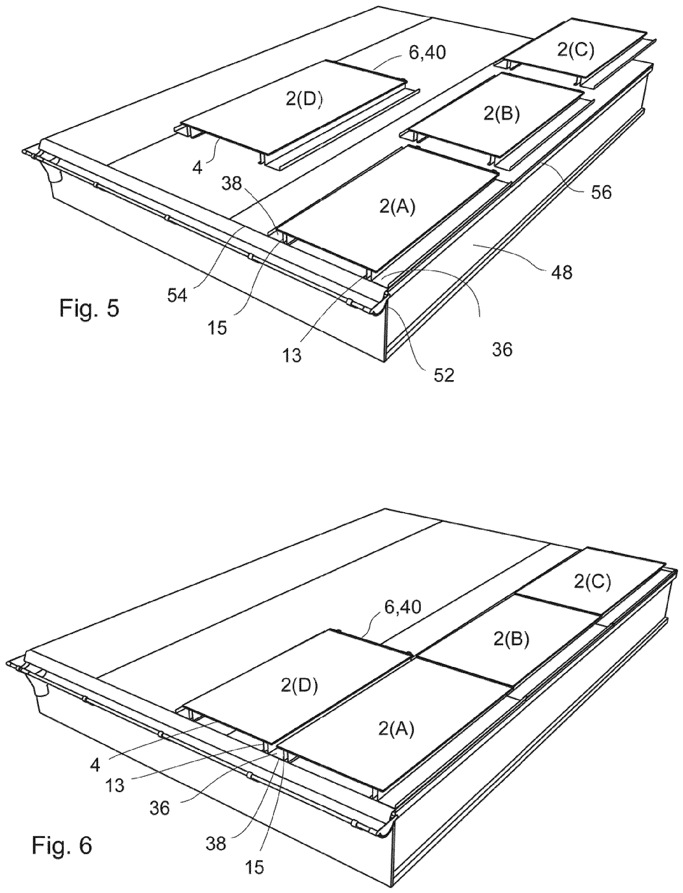

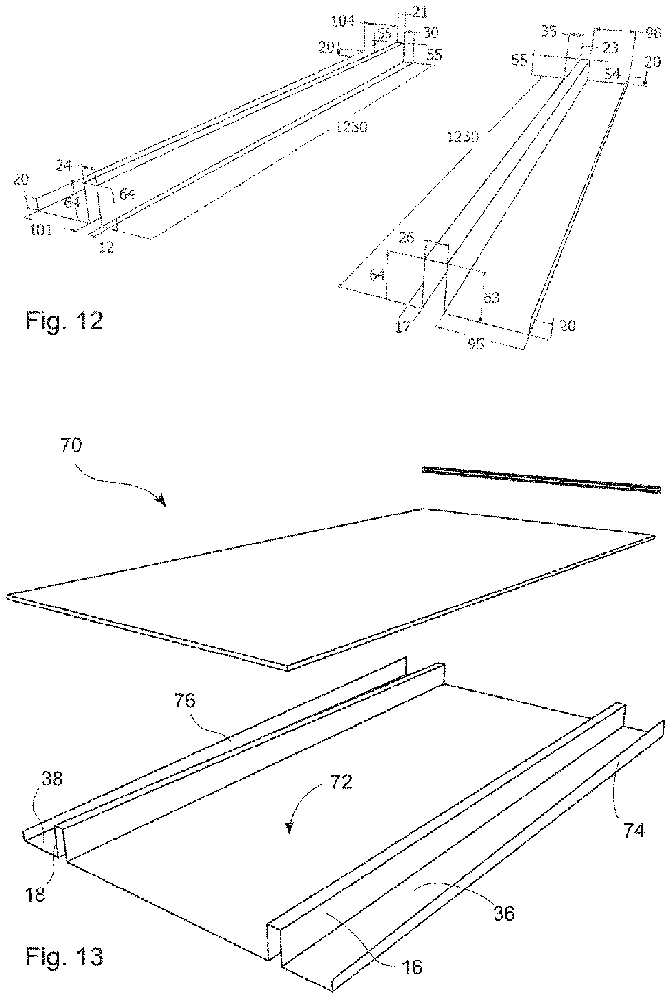

Figures 1-4 show different views of a first embodiment of a PV roofing panel 2 according to the current invention. The PV roofing panel 2 in the current embodiment comprises a PV panel 3 and a panel support element comprising a first support element 13 and a second support element 15. In this embodiment the panel support element comprises two separate individual support elements, but in other embodiments, the panel support element could be a single element (see for example figure 13) or more than two elements. The PV roofing panel of the current invention is arranged to allow multiple PV roofing panels to be arranged in a tile arrangement as a roof coverage, as will be shown and described in more detail with regards to figures 5 to 10.

The PV panel 3 has a lower edge 4, an upper edge 6, a first side edge 8, a second side edge 10, an upwards or sky facing surface 12 and a downwards or roof facing surface 14. In the current embodiment, the PV panel is a thin film PV element; however other forms of PV panel could also be used. In the current embodiment, the PV panel is arranged as a plate element having a strength which is suitable for the current purpose. Re-enforcement means in the form of structural elements which increase the strength and/or stiffness of the PV panel could be attached to the rear side of the PV panel. The PV panel should be strong enough to support wind, rain and snow loads.

The support elements 13, 15 are formed from rectangular sheet metal plates which are individually bent along linear bending lines to their final shape. In the current embodiment, the support elements comprise a lower outwardly extending flange 28,30, an upper inwardly extending flange 17,19 and a downwardly extending flange 16,18 between the upper inwardly extending flange and the lower outwardly extending flange. The outwardly extending flange 28,30 is attached to the bottom edges 20, 22 of the downwardly extending flange 16,18 and the inwardly extending flange 17,19 is attached to the top edge of the downwardly extending flange 16,18. An upwards extending flange 32, 34, is attached to the outer edge of the outwardly extending flange 28,30. This forms an upwards facing U shaped channel 36,38 along the side edges 8,10 of the PV panel 3. In one embodiment, one of the two upwards facing U shaped channesl 36,38 could be removed such that a U shaped channel is only formed on one side of the panel.

As it appears from figure 1 and 2, the support elements 13,15 further comprise a second downwardly extending flange 21,23 which is attached to the inner edge of the inwardly extending flange 17,19. This forms a downwardly extending U shaped channel 31,33. A second inwardly extending flange 25, 27 is attached to the bottom edge 24, 26 of the second downwardly extending flange 21,23. The second inwardly extending flange and the outwardly extending flange are arranged co-planer in the current embodiment.

The two support elements 13,15 are arranged along the two sides of the PV panel and the downwards facing surface of the PV panel is mounted on the upwards facing surface of the upper inwardly extending flanges 17,19 via an adhesive. Furthermore, a sealing strip 40, is attached to the upper edge of the PV panel. The sealing strip will be described later on in more detail.

In the current embodiment, the downwards facing U shaped channels 31,33 provide strength and stiffness to the PV roofing panel. The lower outwardly extending flange 28,30 and the second inwardly extending flange 25,27 are provided to be arranged adjacent to a roof sub structure. These flanges 25,27,28,30 therefore function as support flanges. Screws (not shown) with suitable water tightening means (such as rubber gaskets) can be screwed directly through these support flanges and into the underlying roof sub structure to fasten the PV panel to the roof sub structure. Suitable screws are known to the person skilled in the art of metal roofing.

During assembly of the PV roofing panel of this embodiment, a first and second support element 13,15 are placed in a fixture. An adhesive 39 is applied along the upwardly facing surfaces of the downwardly facing U shaped channels and then the PV panel is placed on the support elements.

In the current embodiment, the first- and second side edges 8, 10 of the PV panel extend out past the outer most downwardly extending flanges 16,18. In this way, the PV panel can be supported more inwardly, thereby reducing the strength requirements of the PV panel itself as the support elements can support the PV panel more.

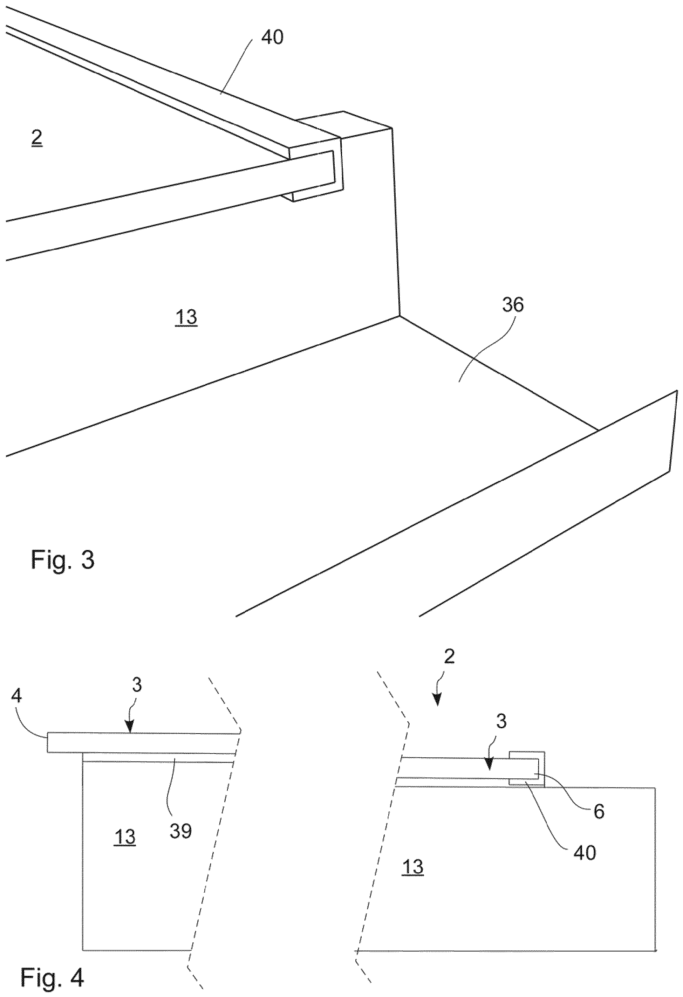

In the current embodiment, the lower edge 4 of the PV panel extends over the lower end of the support elements 13, 15. This can be seen more clearly in the left side view of figure 4. Likewise, the upper end of the support elements extends past the upper edge of the PV panel. The reason for this will be explained in the following.

In order to allow adjacent PV roofing panels to be joined together in a waterproof and windproof manner, the two support elements 13,15 are not formed identically. Rather, the dimensions of the first (left) support element and the dimensions of the second (right) support elements are chosen precisely to allow adjacent panels to fit into each other and overlap. Firstly, the outside width of the downwardly facing U shaped channels 31,33 at the upper edge of the PV panel is less than the inside width of the channels 31,33 at the lower edge of the PV panel. Likewise, the inside width of the upper portion of the upwards facing U shaped channel 36,38 is greater than the outside width of the lower portion of the upwards facing U shaped channel 36,38. In this way, the lower portion of an upper PV roofing panel 2(B) will be able to overlap the upper portion of a lower PV roofing panel 2(A). In this way, a waterproof and windproof covering can be established for PV roofing panels which overlap in the direction from the lower edge of the roof structure to the upper edge of the roof structure.

As was mentioned previously, the upper portion of the support elements extends past the upper edge 6 of the PV panel. In this way, the lower portion of the support elements of an upper PV roofing panel can be made to overlap the upper portion of the support elements of a lower PV roofing panel. Likewise, the lower edge 4 of the PV panel is arranged to extend past the lower portion of the support elements. This allows the lower edge 4 of the PV panel of an upper PV roofing panel 2(B) to overlap the upper edge of the PV panel of a lower PV roofing panel 2(A). In the current embodiment, the distance which the lower edge of the PV panel extends past the lower portion of the support elements is less than the distance which the upper portion of the support elements extends past the upper edge of the PV panel. In this way, the lower portion of the support elements can overlap an upper portion of a lower arranged panel a larger amount than the lower edge of the panel overlaps the upper edge of the lower arranged panel. This feature could also be applied to other embodiments.A large overlap in the panels is typically not desired as this will cause a portion of the power generating surface of the panel to be covered. However, a larger overlap in the support elements will increase the sealing effect between adjacent support elements.

The sealing strip 40 arranged at the upper edge of the PV panel seals the gap between the upper PV panel and the lower PV panel. This ensures a water tight and wind proof coverage. Furthermore, the sealing strip extends over the upper edge of the PV panel and allows an upper panel to be pressed down against the upper edge of the lower panel without damaging the upper edge of the PV panel. The sealing strip acts in this embodiment as a form of protector or shock absorber. This also allows the person assembling the roof structure to place the panels in the correct positions without needing to use measurement devices or external spacing elements. A very fast assembly can therefore be provided.

It should also be noted, especially with reference to figure 4, that the downward facing surface of the lower portion 4 of the PV panel is arranged above the upwards facing surface of the upper portion 6 of the PV panel with respect to the plane defined by the support flanges 25,27,28,30. In this way, when the support flanges of the PV roofing panel are fastened to the roof sub structure, the lower surface of the lower edge of the PV panel is higher up than the upper surface of the upper edge of the PV panel. This ensures that there is room to overlap an upper roofing panel with a lower roofing panel without introducing unnecessary stresses into the PV panels. At the same time, the PV panel is still supported along its entire length by the support elements. In current roofing panels without PV panels, the panels themselves are very robust and can easily tolerate bending without breaking. However, PV panels are more fragile and need to be supported better.

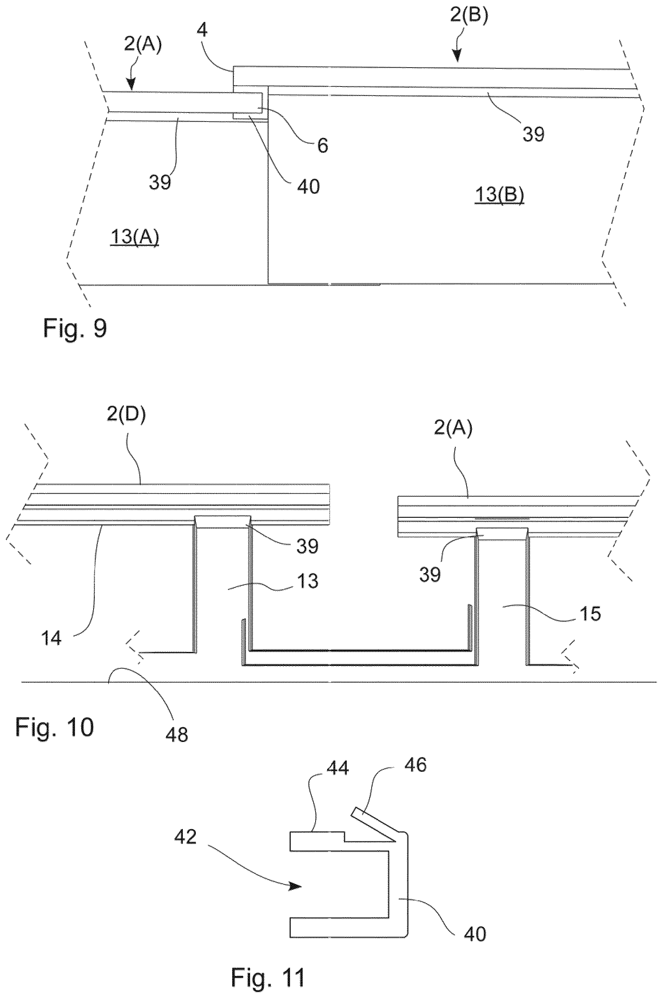

Likewise, the width of the upwardly facing U shaped channel 36 of the first (right) support element 13 is chosen to be slightly narrower than the width of the upwardly facing U shaped channel 38 of the second (left) support element 15. In this way, one can start building the roof from the right side of the roof (as shown in figures 5-7). A first right most PV roofing panel 2(A) is laid down, then additional panels 2(B), 2(C) can be arranged above the first panel as described above. Once a vertical column is finished, an additional PV roofing panel 2(D) can be laid down to the left of the first vertical column with the right channel 36 of the new panel 2(D) arranged inside the left channel 38 of the first panel 2(A). This is illustrated in figure 10 which shows how the left most panel 2(D) overlaps the right most panel 2(A).

In this embodiment, the roof is built from the right side towards the left side of the roof. By changing the relationships of the widths of the left and right channels, one can change the direction of building from left to right.

It should be noted with reference especially to figure 2 and 12, that the inside support flanges 25,27 are not rectangular. This is due to the fact that the support elements 13,15 are formed from rectangular plates which are bent along not completely parallel lines. This allows the formation of the support elements having the widths as discussed above. Since the non rectangular flanges are located on the inside of the support elements, these will be hidden once the panels are mounted on a roof.

With reference to figures 5-7, the assembly process for the roof is now described in more detail. The first PV roofing panel 2 (A) is placed at the lower right corner 52 of the roof substructure 48, with the lower edge 4 arranged parallel with the bottom edge 54 of the roof and the first channel 36 arranged parallel with the side edge 56 of the roof substructure 48. A screw is placed through the bottom right corner of the PV roofing panel to fix the panel to the roof structure. Additional screws can be placed along the channel as desired. In a typical procedure, in addition to the bottom corner screw, a second screw is also placed through the middle of the channel prior to installing the second panel. The next PV roofing panel 2(B) is subsequently tile-arranged above the first roofing panel such that the lower portion of the second PV roofing panel overlaps the upper portion of the first PV roofing panel 2(A). A screw is then placed through the lower right corner of the second PV roofing panel and simultaneously through the upper right corner of the first PV roofing panel. In this way, the first and second PV roofing panels are joined together and to the roof structure with a single screw. This process is repeated until the entire height of the roof structure is finished. In this example roof, three panels are used to form a finished vertical column. In the case where a non-integer number of PV roofing panels would be needed, the upper most roofing panel could be a blank roofing panel without PV panel, but with otherwise the same shape as the PV roofing panel, which is then cut to the desired length.

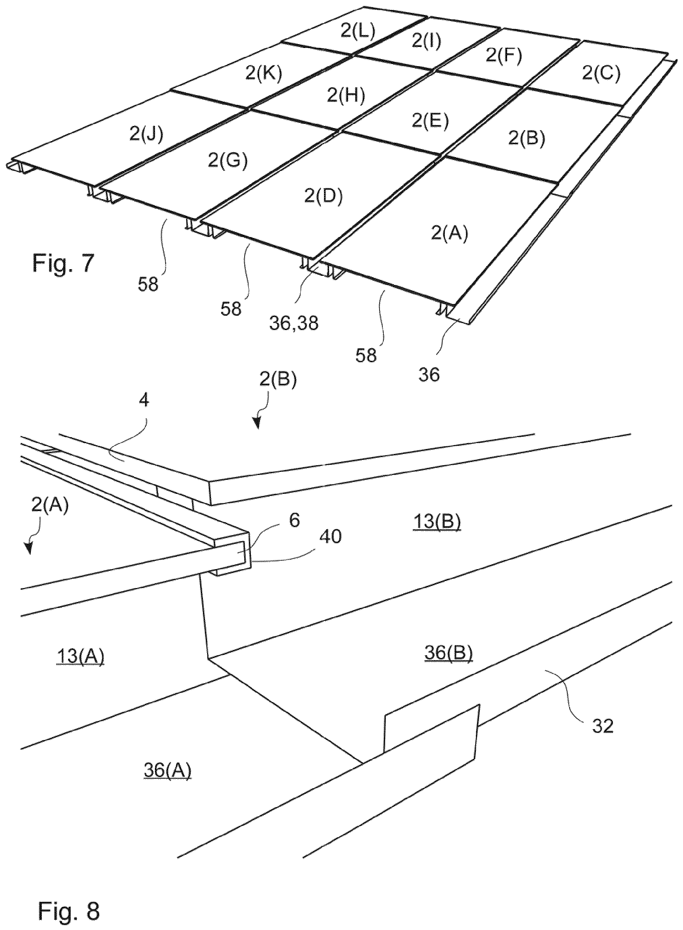

Once a vertical column is complete, additional PV roofing panels can be laid to the left of the finished vertical column. A new bottom element is laid down which overlaps the PV roofing panel arranged to its right. In the current example, a fourth PV roofing panel 2(D) is placed on the roof and overlaps the first PV roofing panel 2(A). Once the fourth PV roofing panel is correctly arranged, a screw is placed through the bottom right corner of the PV roofing panel, thereby securing both the first and fourth PV roofing panels to the roof structure. A second screw can again be inserted through the middle of the channel. This process is repeated until the entire roof is covered. In the current example, this is shown in figure 7, where a total of 12 PV roofing panels 2(A)-2(L) were used to completely cover the roof.

In the example shown in figures 5-7, the panels are mounted on a relatively flat roof without a large slope. In many cases, in these types of flatter roofs, typically having under 15 degrees slope, the roof substructure comprises a lower wooden frame covered by plywood sheets. Often, the plywood sheets are then covered by a roof covering material in sheet form. With the current embodiment of the roofing panel, the roofing panel can be screwed directly into the plywood sheets of the roof substructure without the need for any additional battens on the roof. The screws which are used to attach the roofing panel to the roof substructure would go through the roofing panel, through the roofing sheet material and then into the plywood sheets. In certain cases, in order to secure the waterproofness of the roof structure even more, prior to mounting the roofing panels on the plywood roof, additional battens could be provided on the roof. The battens could be arranged vertically or horizontally. The battens could be screwed into the plywood sheets on top of the roofing sheet material. The roofing panels could then be screwed into the battens. In this way, the screw from the roofing panels does not go through the roofing sheet material. In some cases, the battens could furthermore be wrapped in roofing sheet material to even further improve the waterproofness of the roof.

In other cases, typically in roofs with a steeper slope, typically with slopes over 15 degrees, there are no plywood sheets on the roof sub structure. Instead battens are provided. The roofing panels of the current invention can be screwed directly into these battens. The battens can be arranged horizontally on the roof, or vertically on the roof.

As it appears from Fig. 7 which shows a finished roof coverage comprising 12 PV roofing panels, the upwardly facing channels 36, 38 of the PV roofing panels overlap to form drainage channels running the vertical length of the roof. Likewise, especially from figure 9, it can be seen that the PV panels overlap in the vertical direction such that no gaps are present which could collect water or other debris running down the roofing surface.

Furthermore, it can be seen from figure 7 that, in addition to the drainage channels formed between two adjacent panels in the horizontal direction, an airflow channel 58 is formed between adjacent panels in the vertical direction. This channel is arranged between the two support elements 13,15 and the downwards facing surface of the PV panel. This air flow channel is completely sealed to rain, but allows air to circulate through the channel, thereby cooling the PV panels. The openings of said air flow channels 58 can be provided with nets to provide protection against blocking by birds or other animals.

In the figures, the sealing strip has been shown as a simple U shaped sealing strip attached to the top edge 6 of the PV panel. However, other forms of sealing strip could also be imagined. Figure 11 shows one possible embodiment of a sealing strip 40. In this embodiment, the sealing strip is provided with a U shaped portion 42 which is suited to receive the upper edge 6 of the PV panel 3. The upwards facing side 44 of the sealing strip 40 furthermore comprises an upwardly biased lip 46 which compensates for displacements and inaccuracies in fit between two adjacent tile laid PV roofing panels, so that no stresses are introduced into adjacent PV panels while still maintaining a waterproof and windproof sealing effect. The downward facing surface of the upper panel will press the sealing lip downwards. In another embodiment, not shown, instead of an upwardly biased lip, another form of pliable sealing element could be arranged on the upwards facing surface of the sealing strip. For example, a pliable tubular element could be arranged along the upwards facing surface of the sealing strip. In one example, such a pliable tubular element could have a D shaped cross section.

Figure 12 shows the support elements 13,15 of the roofing panel of figure 2 with specific dimensions in millimeters to provide one concrete example embodiment of support elements. In this case, the relationships between the different dimensions of the flanges as discussed above are illustrated. These dimensions should in no way limit the scope of protection of the current claims, and are only provided to provide an example.

In another embodiment of a PV roofing panel 70 according to the current invention, a panel support element 72 is provided which comprises a single rectangular sheet metal plate 62 bent into its final shape instead of two separate sheet metal plates as in the previous embodiment. In general, the dimensions of the panel support element of this embodiment are very similar to the previous embodiment, however instead of two separate support elements, only a single element is provided. This has the disadvantage of requiring more sheet metal material and thereby increasing the cost and weight of the panel. However, it also has the advantage that a completely sealed air flow channel is provided between the panel support element and the downwards facing surface of the PV panel. This could be an interesting and beneficial embodiment, if for example fluid filled tubes are provided in the air flow channel. Any condensation drops would be captured by the panel support element without getting into contact with the roof structure. The lower surface of the panel support element of an upper roofing panel can also overlap the lower surface of the panel support element of a lower roofing panel to again secure the waterproofness of the panel. As a side note, it should be noted that in this embodiment, the outer upwardly extending flanges 74,76 are not completely rectangular due to the non-uniform bending lines used to provide the different dimensions as discussed above. These flanges are visible during and after mounting.

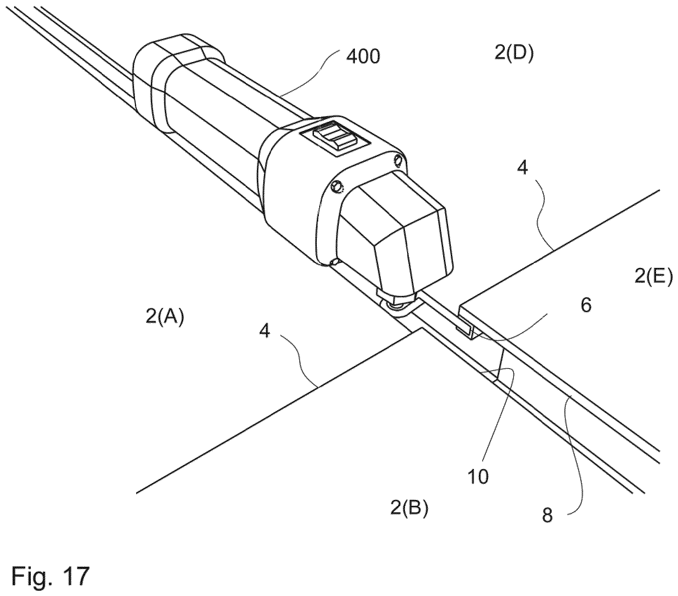

It should also be noted that an additional advantage with the current embodiment, is that it is possible to relatively easily exchange a PV panel in case of damage, by cutting the damaged PV panel off the rails 31,33 and then gluing a new PV panel into place. This means that the entire roof does not have to be changed. The procedure can be explained with reference to figure 10 and 17. In this case, a cutter 400 can be inserted into the gap between two adjacent panels 2(A),2(D) as shown in figure 17. The cutter can be of the form typically called a "fine cutter" or of another suitable type. A sharp knife which is formed to be inserted into the gap could also be used. The cutter can then cut through the adhesive joining the PV panel to the upwards facing surface of the panel support element 13,15. Once the adhesive is removed, the old adhesive can be cleaned off the panel support element and a new adhesive applied. A new PV panel can then be placed on top of the panel support element and fastened to the panel support element via the adhesive.

This procedure is made possible due to the fact that there is room to get a cutting tool into place underneath the panel. In the current embodiment, this is possible since the outwardly extending flange 28,30 which is fastened to the roof sub structure is arranged underneath the inwardly facing flange to which the PV panel is attached. Furthermore, there is a gap between adjacent PV panels in the horizontal direction of the roof.

Figure 14 shows very schematically, another embodiment of a roofing panel 100 according to the current invention. The figure shows a cross section through the roof when looking along a direction from the lower edge of the roof to the upper edge of the roof. In this case, the roofing panel 100 comprises a PV panel 102 and a panel support element 104. However in this case, the panel support element is only arranged with an upwards facing U-shaped channel 106 on one side of the PV panel. On the other side of the PV panel, only an outwardly extending support flange 108 is provided. The waterproofness of the roofing panel is not quite as good as the one shown previously, but the panel support elements can be made simpler since there are not two U shaped channels which need to fit into each other as with the previous embodiment. It should be noted that in this case, the roof is built from left to right instead of from right to left as with the previous embodiments.

Figure 15 shows another very schematic embodiment of a roofing panel 200 according to the current invention. The figure is shown along the same direction as described with regards to figure 14. In this case, instead of having the PV panel 202 arranged above the outwardly extending support flanges 206,208, the PV panel is arranged below the support flanges 206,208. In this case, it is first necessary to mount vertically running battens 212 to the roof sub structure 210. The roofing panel 200 can then be laid on top of the battens and screwed into the battens. In this embodiment, a downwards facing U shaped channel 206 is used instead of an upwards facing U-shaped channel as in the first presented embodiments. However, the principles are very similar, but the dimensional relationships are switched. In this embodiment, a downwards facing U-shaped channel 206 is arranged on only one side of the PV panel. However, in another embodiment, a downwards facing U-shaped channel could be provided on both sides.

As with the first presented embodiments, the embodiment of figure 15, has outwardly extending support flanges 206,208 which are used to fasten the roofing panel to the roof sub structure. Inwardly extending flanges 214 are provided on the panel support element 204 to which the roof facing surface of the PV panel is attached via an adhesive or other form of fastening means. The inwardly and outwardly extending flanges are connected via a vertically extending flange 216. As with the previous embodiments, the vertically extending flanges are arranged such that the upper edge of the PV panel is arranged below the lower edge of the PV panel with respect to the plane defined by the support flanges 206,208. In this way, when the panel is mounted on the roof sub structure, the PV panel is supported along its entire length and no stresses are introduced into the PV panel during assembly.

Figure 16 shows a further schematic embodiment 300 of a roofing panel according to the current invention. The figure is again shown from the same perspective as described with regards to figure 14. In this case, the roofing panel comprises a PV panel 302 and a panel support element 304. The panel support element comprises downwardly extending flanges 306 which are arranged outside the side edges 308 of the PV panel. In this way, the lower edge of the PV panel does not need to extend past the lower edge of the panel support element. Likewise, the upper edge of the panel support element does not have to extend past the upper edge of the PV panel. In this embodiment, the distance between the downwardly extending flanges at the top edge is less than the distance at the lower edge. In this way, the lower edge of an upper panel can overlap the upper edge of a lower panel. In one embodiment, a sealing strip could be applied along both the upper edge of the PV panel edge and along the upper edge of the downwardly extending flanges. Like with the previous embodiments, the downwardly extending flanges are formed with a taper, such that the lower surface of the lower edge of the PV panel is arranged higher than the upper surface of the upper edge of the PV panel. This again allows the PV panels to overlap in the vertical direction, while still allowing the PV Panel to be supported along its entire length and without introducing stresses into the PV Panel.

It is to be noted that the figures and the above description have shown the example embodiments in a simple and schematic manner. Many of the specific mechanical details have not been shown since the person skilled in the art should be familiar with these details and they would just unnecessarily complicate this description. For example, the specific materials used and the specific adhesives used have not been described in detail since it is maintained that the person skilled in the art would be able to find suitable materials and suitable adhesives. Likewise, the electrical connections between adjacent panels have not been disclosed as this could be solved in different ways, as will be known to the person skilled in the art.

## Claims

1. Photovoltaic (PV) roofing panel (2) for being placed on a roof structure (48) where the PV roofing panel is suitable for being arranged with other PV roofing panels in a tile like manner to form a roof coverage, the PV roofing panel comprising a PV panel (3) having a rectangular shape, with a lower edge (4), an upper edge (6), a first side edge (8) a second side edge (10), a sky facing surface (12), and a roof facing surface (14) and comprising a panel support element (13, 15) attached to the roof facing surface (14) of the PV panel,
wherein
a) the panel support element (13, 15) comprises a first and a second outwardly extending flange (28,30), said first outwardly extending flange (28) arranged along the first side edge (8) of the PV panel (3) and said second outwardly extending flange (30) arranged along the second side edge (10) of the PV panel, said first and second outwardly extending flanges extending outside the first and second side edges (8, 10) of the PV panel respectively and said first and second outwardly extending flanges each being arranged with a downwards facing surface which is arranged to abut the roof structure when the PV roofing panel is mounted on a roof structure,
b) the panel support element is arranged such that the bottom surface of the lower edge of the PV panel is above the upper surface of the upper edge of the PV panel with reference to the plane defined by the downwards facing surface of the outwardly extending flanges,
c) the panel support element (13, 15) comprises a first downwardly extending flange (16) and a second downwardly extending flange (18) arranged along the first side edge (8) and the second side edge (10) of the PV panel respectively, and in that the first and second outwardly extending flanges (28,30) extend from the bottom edges (20, 22) of said first and second downwardly extending flanges (16, 18) respectively and in that the panel support element (13,15) comprises a first and a second inwardly extending flange (17,19) which is arranged along the top edge of the downwardly extending flanges (16,18), the roof facing surface (14) of the PV panel (3) being fastened to said inwardly extending flanges,
d) the first and second downwardly extending flanges (16,18) are arranged inside the side edges (8,10) of the PV panel and in that the lower edge (4) of the PV panel protrudes outwardly past the lower edge of the panel support element (13, 15) and in that the upper edge of the panel support element (13,15) extends outwardly past the upper edge (6) of the PV panel (3), and
e) the distance which the lower edge of the PV panel extends outwardly past the lower portion of the support elements is less than the distance which the upper portion of the support elements extends outwardly past the upper edge of the PV panel.

2. Photovoltaic (PV) roofing panel (2) according to claim 1, **characterized in that** the distance between the first downwardly extending flange (16) and the second downwardly extending flange (18) at the upper edge (6) of the PV panel (3) is less than the distance between the first downwardly extending flange (16) and the second downwardly extending flange (18) at the lower edge (4) of the PV panel.

3. Photovoltaic (PV) roofing panel (2) according to claim 1 or 2, **characterized in that** the panel support element (13,15) comprises an upwardly extending flange (32,34) arranged at the outer edge of the first and/or the second outwardly extending flange (28,30) such that an upwardly facing U-shaped channel (36,38) is formed along the first and/or the second side edge (8,10) of the PV panel (3).

4. Photovoltaic (PV) roofing panel (2) according to claim 3, **characterized in that** an upwardly extending flange (32,34) is arranged at the outer edges of both the first and the second outwardly extending flanges (28,30) such that an upwardly facing U-shaped channel (36,38) is formed along both side edges (8,10) of the PV panel (3) and **in that** the width of the upwardly facing U-shaped channel (36) on the left side is greater than or less than the width of the upwardly facing U-shaped channel (38) on the right side and **in that** the width of the channels (36,38) at the upper edge (6) of the PV panel (3) is greater than the width of the channels (36,38) at the lower edge (4) of the PV panel (3).

5. Photovoltaic (PV) roofing panel (2) according to any one of claims 1 to 4, **characterized in that** angle between the downwardly extending flanges (16,18) and the PV panel (3) is between 45 and 90 degrees, or between 60 and 90 degrees or between 75 and 90 degrees or 90 degrees.

6. Photovoltaic (PV) roofing panel (2) according to any one of claims 1 to 4, **characterized in that** the panel support element (13,15) further comprises a third and a fourth downwardly extending flange (21,23) arranged along the inner edges of the inwardly facing flanges (17,19) of the panel support element, said first and third downwardly extending flanges (16,21) and the first inwardly extending flange (17) forming a first downwards facing U shaped channel (31) and the second and fourth downwardly extending flanges (18,23) and the second inwardly extending flange (19) forming a second downwards facing U shaped channel (33).

7. Photovoltaic (PV) roofing panel (2) according to any one of claims 1 to 6, **characterized in that** the panel support element (13, 15) comprises a first support element (13) attached to the PV panel along the first side edge (8) of the PV panel (3) and a second support element (15) attached to the PV panel (3) along the second side edge (10) of the PV panel (3).

8. Photovoltaic (PV) roofing panel (2) according to claim 7, **characterized in that** first support element (13) and the second support element (15) are provided as individual metal plates which are bent along linear lines.

9. Photovoltaic (PV) roofing panel (2) according to any one of claims 1 to 8, **characterized in that** that the PV roofing panel further comprises a sealing strip (40) arranged along the upper edge (6) of the PV panel (3) and/or the bottom edge (4) of the PV panel (3) and having a portion which overlaps a portion of the sky facing surface (12) of the PV panel (3) at the upper edge (6) of the PV panel and/or the bottom edge (4) of the PV panel respectively and extends in a direction having a vector component which is perpendicular to the sky facing surface and/or the roof facing surface respectively of the PV panel.

## Patentansprüche

1. Photovoltaik-(PV-)Dachplatte (2) zum Platzieren auf einer Dachstruktur (48), wobei die PV-Dachplatte dazu geeignet ist, mit anderen PV-Dachplatten auf eine dachziegelartige Weise angeordnet zu sein, um eine Dachbedeckung auszubilden, wobei die PV-Dachplatte eine PV-Platte (3) umfasst, die eine rechtwinklige Form aufweist, mit einer unteren Kante (4), einer oberen Kante (6), einer ersten Seitenkante (8), einer zweiten Seitenkante (10), einer zum Himmel gerichteten Fläche (12) und einer zum Dach gerichteten Fläche (14), und die ein Plattenträgerelement (13, 15) aufweist, das an der zum Dach gerichteten Fläche (14) der PV-Platte befestigt ist, wobei
a) das Plattenträgerelement (13, 15) einen ersten und einen zweiten sich nach außen erstreckenden Flansch (28, 30) umfasst, wobei der erste sich nach außen erstreckende Flansch (28) entlang der ersten Seitenkante (8) der PV-Platte (3) angeordnet ist und der zweite sich nach außen erstreckende Flansch (30) entlang der zweiten Seitenkante (10) der PV-Platte angeordnet ist, wobei der erste und der zweite sich nach außen erstreckende Flansch sich jeweils außerhalb der ersten und der zweiten Seitenkante (8, 10) der PV-Platte erstrecken und der erste und der zweite sich nach außen erstreckende Flansch jeweils mit einer nach unten gerichteten Fläche angeordnet sind, die dazu angeordnet ist, an der Dachstruktur anzuliegen, wenn die PV-Dachplatte auf einer Dachstruktur montiert ist,
b) das Plattenträgerelement derart angeordnet ist, dass die Unterfläche der unteren Kante der PV-Platte über der oberen Fläche der oberen Kante der PV-Platte liegt, in Bezug auf die Ebene, die von der nach unten gerichtete Fläche der sich nach außen erstreckenden Flansche definiert wird,
c) das Plattenträgerelement (13, 15) einen ersten sich nach unten erstreckenden Flansch (16) und einen zweiten sich nach unten erstreckenden Flansch (18) umfasst, die sich jeweils entlang der ersten Seitenkante (8) und der zweiten Seitenkante (10) der PV-Platte erstrecken, und dadurch, dass der erste und der zweite sich nach außen erstreckende Flansch (28, 30) sich von den Unterkanten (20, 22) des ersten und des zweiten sich nach unten erstreckenden Flansches (16, 18) erstrecken und dadurch, dass das Plattenträgerelement (13, 15) einen ersten und einen zweiten sich nach innen erstreckenden Flansch (17, 19) umfassen, der entlang der Oberkante der sich nach unten erstreckenden Flansche (16, 18) erstrecken, wobei die zum Dach gerichtete Fläche (14) der PV-Platte (3) an den sich nach innen erstreckenden Flanschen befestigt ist,
d) der erste und der zweite sich nach unten erstreckende Flansch (16, 18) innerhalb der Seitenkanten (8, 10) der PV-Platte angeordnet sind und dadurch, dass die untere Kante (4) der PV-Platte nach außen über die untere Kante des Plattenträgerelements (13, 15) hinaus übersteht, und dadurch, dass die obere Kante des Plattenträgerelements (13, 15) sich über die obere Kante (6) der PV-Platte (3) hinaus nach außen erstreckt, und
e) die Distanz, über die sich die untere Kante der PV-Platte über den unteren Abschnitt des Trägerelements hinaus nach außen erstreckt, geringer ist als die Distanz, über die sich der obere Abschnitt des Trägerelements über die obere Kante der PV-Platte hinaus nach außen erstreckt.

2. Photovoltaik-(PV-)Dachplatte (2) nach Anspruch 1, **gekennzeichnet dadurch, dass** die Distanz zwischen dem ersten sich nach unten erstreckenden Flansch (16) und dem zweiten sich nach unten erstreckenden Flansch (18) an der oberen Kante (6) der PV-Platte (3) geringer ist als die Distanz zwischen dem ersten sich nach unten erstreckenden Flansch (16) und dem zweiten sich nach unten erstreckenden Flansch (18) an der unteren Kante (4) der PV-Platte.

3. Photovoltaik-(PV-)Dachplatte (2) nach Anspruch 1 oder 2, **gekennzeichnet dadurch, dass** das Plattenträgerelement (13, 15) einen sich nach oben erstreckenden Flansch (32, 34) umfasst, der an der Außenkante des ersten und/oder des zweiten sich nach außen erstreckenden Flansches (28, 30) so angeordnet ist, dass ein nach oben gerichteter U-förmiger Kanal (36, 38) entlang der ersten und/oder der zweiten Seitenkante (8, 10) der PV-Platte (3) ausgebildet ist.

4. Photovoltaik-(PV-)Dachplatte (2) nach Anspruch 3, **gekennzeichnet dadurch, dass** ein sich nach oben erstreckender Flansch (32, 34) an den Außenkanten von sowohl dem ersten als auch dem zweiten sich nach außen erstreckenden Flansch (28, 30) derart angeordnet ist, dass ein nach oben gerichteter U-förmiger Kanal (36, 38) entlang beider Seitenkanten (8, 10) der PV-Platte (3) ausgebildet ist, und dadurch, dass die Breite des nach oben gerichteten U-förmigen Kanals (36) auf der linken Seite größer ist als oder geringer ist als die Breite des nach oben gerichteten U-förmigen Kanals (38) auf der rechten Seite, und dadurch, dass die Breite der Kanäle (36, 38) an der oberen Kante (6) der PV-Platte (3) größer als die Breite der Kanäle (36, 38) an der unteren Kante (4) der PV-Platte (3) ist.

5. Photovoltaik-(PV-)Dachplatte (2) nach einem der Ansprüche 1 bis 4, **gekennzeichnet dadurch, dass** ein Winkel zwischen den sich nach unten erstreckenden Flanschen (16, 18) und der PV-Platte (3) zwischen 45 und 90 Grad, oder zwischen 60 und 90 Grad, oder zwischen 75 und 90 Grad, oder 90 Grad beträgt.

6. Photovoltaik-(PV-)Dachplatte (2) nach einem der Ansprüche 1 bis 4, **gekennzeichnet dadurch, dass** das Plattenträgerelement (13, 15) ferner einen dritten und einen vierten sich nach unten erstreckenden Flansch (21, 23) umfasst, die entlang der Innenkanten der nach innen gerichteten Flansche (17, 19) des Plattenträgerelements angeordnet sind, wobei der erste und der dritte sich nach unten erstreckende Flansch (16, 21) und der erste sich nach innen erstreckende Flansch (17) einen ersten nach unten gerichteten U-förmigen Kanal (31) ausbilden, und der zweite und der vierte sich nach unten erstreckende Flansch (18, 23) und der zweite sich nach innen erstreckende Flansch (19) einen zweiten nach unten gerichteten U-förmigen Kanal (33) ausbilden.

7. Photovoltaik-(PV-)Dachplatte (2) nach einem der Ansprüche 1 bis 6, **gekennzeichnet dadurch, dass** das Plattenträgerelement (13, 15) ein erstes Trägerelement (13), das an der PV-Platte entlang der ersten Seitenkante (8) der PV-Platte (3) angeordnet ist, und ein zweites Trägerelement (15) umfasst, das an der PV-Platte (3) entlang der zweiten Seitenkante (10) der PV-Platte (3) angeordnet ist.

8. Photovoltaik-(PV-)Dachplatte (2) nach Anspruch 7, **gekennzeichnet dadurch, dass** das erste Trägerelement (13) und das zweite Trägerelement (15) als einzelne Metallplatten bereitgestellt sind, die entlang linearer Linien gebogen sind.

9. Photovoltaik-(PV-)Dachplatte (2) nach einem der Ansprüche 1 bis 8, **gekennzeichnet dadurch, dass** die PV-Dachplatte ferner einen Dichtungsstreifen (40) umfasst, der entlang der oberen Kante (6) der PV-Platte (3) und/oder der Unterkante (4) der PV-Platte (3) angeordnet ist und einen Abschnitt aufweist, der einen Abschnitt der zum Himmel gerichteten Fläche (12) der PV-Platte (3) jeweils an der oberen Kante (6) der PV-Platte und/oder der Unterkante (4) der PV-Platte überlappt und sich in eine Richtung erstreckt, die eine Vektorkomponente aufweist, die jeweils senkrecht zu der zum Himmel gerichteten Fläche und/oder der zum Dach gerichteten Fläche der PV-Platte ist.

## Revendications

1. Panneau de toiture photovoltaïque (PV) (2) destiné à être placé sur une structure de toit (48), où le panneau de toiture PV est adapté pour être disposé avec d'autres panneaux de toiture PV de manière similaire à une tuile afin de former une couverture de toit, le panneau de toiture PV comprenant un panneau PV (3) ayant une forme rectangulaire, avec un rebord inférieur (4), un rebord supérieur (6), un premier rebord latéral (8), un deuxième rebord latéral (10), une surface orientée vers le ciel (12) et une surface orientée vers le toit (14) et comprenant un élément de support de panneau (13, 15) fixé à la surface orientée vers le toit (14) du panneau PV, dans lequel
a) l'élément de support de panneau (13, 15) comprend une première et une deuxième brides se prolongeant vers l'extérieur (28, 30), ladite première bride se prolongeant vers l'extérieur (28) étant disposée le long du premier rebord latéral (8) du panneau PV (3) et ladite deuxième bride se prolongeant vers l'extérieur (30) étant disposée le long du deuxième rebord latéral (10) du panneau PV, lesdites première et deuxième brides se prolongeant vers l'extérieur se prolongeant à l'extérieur des premier et deuxième rebords latéraux (8, 10) du panneau PV respectivement et lesdites première et deuxième brides se prolongeant vers l'extérieur, chacune étant disposée avec une surface orientée vers le bas qui est disposée pour buter contre la structure de toit lorsque le panneau de toiture PV est monté sur une structure de toit,
b) l'élément de support de panneau est disposé de sorte que la surface inférieure du rebord inférieur du panneau PV soit au-dessus de la surface supérieure du rebord supérieur du panneau PV par rapport au plan défini par la surface orientée vers le bas des brides se prolongeant vers l'extérieur,
c) l'élément de support de panneau (13, 15) comprend une première bride se prolongeant vers le bas (16) et une deuxième bride se prolongeant vers le bas (18) disposées le long du premier rebord latéral (8) et du deuxième rebord latéral (10) du panneau PV respectivement, et en ce que les première et deuxième brides se prolongeant vers l'extérieur (28, 30) se prolongent à partir des rebords inférieurs (20, 22) desdites première et deuxième brides se prolongeant vers le bas (16, 18) respectivement et en ce que l'élément de support de panneau (13, 15) comprend une première et une deuxième bride se prolongeant vers l'intérieur (17, 19) qui est disposée le long du rebord supérieur des brides se prolongeant vers le bas (16,18), la surface orientée vers le toit (14) du panneau PV (3) étant fixée auxdites brides se prolongeant vers l'intérieur,
d) les première et deuxième brides se prolongeant vers le bas (16, 18) sont disposées à l'intérieur des rebords latéraux (8, 10) du panneau PV et en ce que le rebord inférieur (4) du panneau PV fait saillie vers l'extérieur au-delà du rebord inférieur de l'élément de support de panneau (13, 15) et en ce que le rebord supérieur de l'élément de support de panneau (13, 15) se prolonge vers l'extérieur au-delà du rebord supérieur (6) du panneau PV (3), et
e) la distance sur laquelle le rebord inférieur du panneau PV se prolonge vers l'extérieur au-delà de la partie inférieure des éléments de support est inférieure à la distance sur laquelle la partie supérieure des éléments de support se prolonge vers l'extérieur au-delà du rebord supérieur du panneau PV.

2. Panneau de toiture photovoltaïque (PV) (2) selon la revendication 1, **caractérisé en ce que** la distance entre la première bride se prolongeant vers le bas (16) et la deuxième bride se prolongeant vers le bas (18) au niveau du rebord supérieur (6) du panneau PV (3) est inférieur à la distance entre la première bride se prolongeant vers le bas (16) et la deuxième bride se prolongeant vers le bas (18) au niveau du rebord inférieur (4) du panneau PV.

3. Panneau de toiture photovoltaïque (PV) (2) selon la revendication 1 ou 2, **caractérisé en ce que** l'élément de support de panneau (13, 15) comprend une bride se prolongeant vers le haut (32, 34) disposée au niveau du rebord extérieur de la première et/ou de la deuxième bride se prolongeant vers l'extérieur (28, 30) de sorte qu'un canal en forme de U orienté vers le haut (36, 38) est formé le long du premier et/ou du deuxième rebord latéral (8, 10) du panneau PV (3).

4. Panneau de toiture photovoltaïque (PV) (2) selon la revendication 3, **caractérisé en ce qu'**une bride se prolongeant vers le haut (32, 34) est disposée au niveau des rebords extérieurs à la fois de la première et de la deuxième brides se prolongeant vers l'extérieur (28, 30) de sorte qu'un canal en forme de U orienté vers le haut (36, 38) est formé le long des deux rebords latéraux (8, 10) du panneau PV (3) et **en ce que** la largeur du canal en forme de U orienté vers le haut (36) sur le côté gauche est supérieure ou inférieure à la largeur du canal en forme de U orienté vers le haut (38) sur le côté droit et **en ce que** la largeur des canaux (36, 38) au niveau du rebord supérieur (6) du panneau PV (3) est supérieure à la largeur des canaux (36, 38) au niveau du rebord inférieur (4) du panneau PV (3).

5. Panneau de toiture photovoltaïque (PV) (2) selon l'une quelconque des revendications 1 à 4, **caractérisé en ce que** l'angle entre les brides se prolongeant vers le bas (16, 18) et le panneau PV (3) est compris entre 45 et 90 degrés, ou entre 60 et 90 degrés ou entre 75 et 90 degrés ou 90 degrés.

6. Panneau de toiture photovoltaïque (PV) (2) selon l'une quelconque des revendications 1 à 4, **caractérisé en ce que** l'élément de support de panneau (13, 15) comprend en outre une troisième et une quatrième brides se prolongeant vers le bas (21, 23) disposées le long des rebords intérieurs des brides orientées vers l'intérieur (17, 19) de l'élément de support de panneau, lesdites première et troisième brides se prolongeant vers le bas (16, 21) et la première bride se prolongeant vers l'intérieur (17) formant un premier canal en forme de U orienté vers le bas (31) et les deuxième et quatrième brides se prolongeant vers le bas (18, 23) et la deuxième bride se prolongeant vers l'intérieur (19) formant un deuxième canal en forme de U orienté vers le bas (33).

7. Panneau de toiture photovoltaïque (PV) (2) selon l'une quelconque des revendications 1 à 6, **caractérisé en ce que** l'élément de support de panneau (13, 15) comprend un premier élément de support (13) fixé au panneau PV le long du premier rebord latéral (8) du panneau PV (3) et un deuxième élément de support (15) fixé au panneau PV (3) le long du deuxième rebord latéral (10) du panneau PV (3).

8. Panneau de toiture photovoltaïque (PV) (2) selon la revendication 7, **caractérisé en ce que** le premier élément de support (13) et le deuxième élément de support (15) sont fournis sous forme de plaques métalliques individuelles qui sont courbées le long de lignes linéaires.

9. Panneau de toiture photovoltaïque (PV) (2) selon l'une quelconque des revendications 1 à 8, **caractérisé en ce que** le panneau de toiture PV comprend en outre une bande d'étanchéité (40) disposée le long du rebord supérieur (6) du panneau PV (3) et/ou du rebord inférieur (4) du panneau PV (3) et ayant une partie qui chevauche une partie de la surface orientée vers le ciel (12) du panneau PV (3) au niveau du rebord supérieur (6) du panneau PV et/ou du rebord inférieur (4) du panneau PV respectivement et se prolonge dans une direction ayant une composante vectorielle qui est perpendiculaire à la surface orientée vers le ciel et/ou à la surface orientée vers le toit respectivement du panneau PV.
